Europäisches Patentamt

European Patent Office

Office européen des brevets

(11) Publication number: **0 419 870 A1**

## (12) EUROPEAN PATENT APPLICATION

(21) Application number: 90116524.1

(22) Date of filing: 29.08.90

(51) Int. Cl.5: **F16J 15/34**

(30) Priority: 26.09.89 CA 613287

(43) Date of publication of application:
03.04.91 Bulletin 91/14

(84) Designated Contracting States:
AT BE CH DE DK ES FR GB GR IT LI LU NL SE

(71) Applicant: REACT ENERGY LTD.
5622 Burleigh Cr. S.E.
Calgary, Alberta T2H 1Z8(CA)

(72) Inventor: Barmby, Thomas Hugh
416 Woodbend Road, S.E.
Calgary, Alberta, T2J 1L8(CA)

(74) Representative: Weitzel, Wolfgang, Dr.-Ing.
Friedenstrasse 10
W-7920 Heidenheim(DE)

(54) Rotary shaft seal.

(57) A rotary shaft seal having a disc (62) rotatable with the shaft (18) and a non-rotatable ring (46), the ring being axially biased into engagement with the disc (62) to form a sealing interface. The ring (46) has a plurality of equiangularly spaced notches (70) which communicate with the interface to inhibit breakdown of the seal.

FIG.2

## ROTARY SHAFT SEAL

This invention relates to rotary seals and particularly, but not necessarily exclusively, to rotary seals for gas turbine shafts. Such seals comprise a disc secured to the turbine shaft and a non-rotary ring having a radial surface resiliently pressed axially into engagement with the disc. Oil is delivered to the interface of the disc and ring. The pressure of the gas and the frictional forces at this interface tend to cause excessive wear and failure of the seal.

The present invention provides a simple and inexpensive seal in which the tendency for the oil to move from the interface is reduced.

According to this invention, one of the ring and disc is provided with a plurality of circumferentially spaced notches which communicate with the interface and with the periphery of that one of the ring and disc.

Preferably the notches are formed in the ring. Most desirably they are four in number and equiangularly spaced.

An embodiment of the invention is illustrated in the accompanying drawings in which:

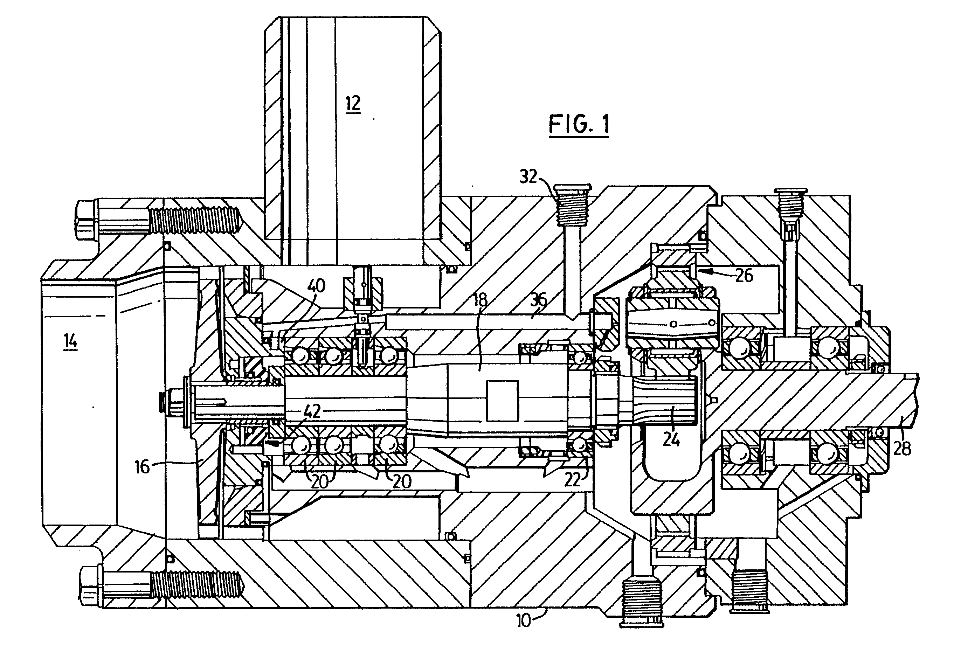

Figure 1 is an axial section of a turbine embodying the seal of the present invention;

Figure 2 is an enlarged cross sectional view of the seal taken on the line X-X of figure 3;

Figure 3 is an axial view of the seal; and

Figures 4 and 5 are side (partly sectioned) and front views of the seal ring of the seal.

The turbine comprises a housing 10, having a gas inlet 12, gas outlet 14 and a turbine wheel 16 mounted upon a shaft 18. The shaft is mounted in ring bearings 20 and 22 and terminates in a toothed portion 24 constituting the sun of an epicyclic gear box 26 of which the output shaft is shown at 28. In operation, gas under pressure enters the casing at inlet 12, passes through a nozzle ring 30 to be directed through the blades of turbine wheel 16 and thence to the outlet 14. Power is taken off the turbine through gear box 26.

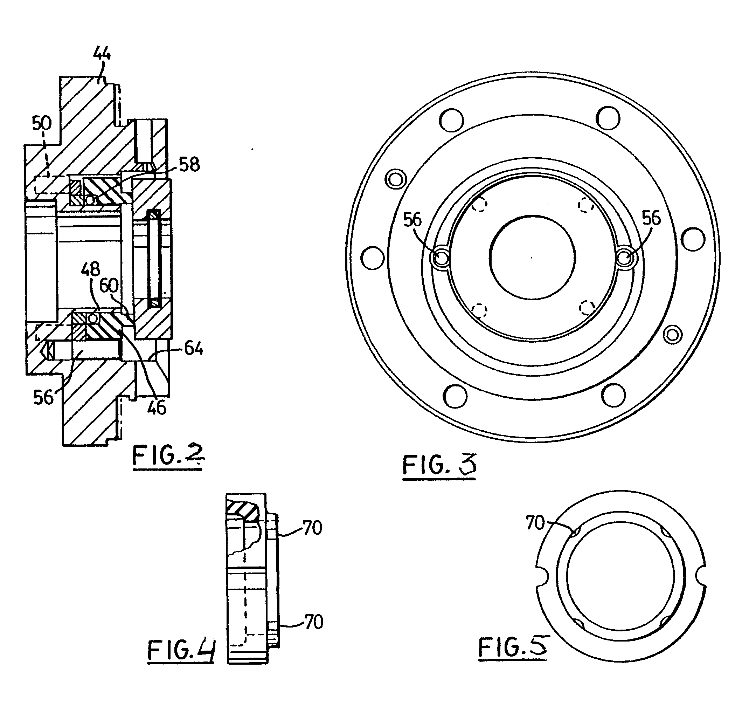

Lubricating oil is delivered to the casing through a union at 32 and passes along lubricating passages 34 and 36. The oil is delivered through a lubricating jet 38 to the bearing assembly 20 and through orifice 40 to the seal assembly 42 which protects the bearings against the propulsive gases. The seal assembly is illustrated in greater detail in figures 2 and 3.

The seal comprises a carrier 44 by which the seal ring 46 is secured to the nozzle ring. The seal ring is received in an annular recess 48 in the radial surface of which four, equiangularly spaced, axially extending spring pockets 50 are formed. A seal reaction washer 52 is disposed between the springs 54 and the back surface of the seal ring, i.e., the surface opposite the seal face, to distribute the spring loading equally about, the seal ring. A pair of dowels 56 guide the seal rings axial movement and prevent its turning. An O ring 58 is disposed between the inner axial surface of recess 48 and the adjacent surface of the seal ring.

An annular ring projects forwardly of the main body of the seal ring to define a radial seal face 60 which co-operates with the seal disc 62 which is mounted to the inner race of the bearing assembly 20.

The annular ring of the ring seal and the seal disc are disposed within an eccentric circular recess 64 of the carrier 44. In the lower part of which there is an oil discharge opening 66.

The seal ring is made of carbon graphite and the disc of tungsten carbide.

To this point, the seal is conventional. What characterises this invention is the provision of notches formed, in this embodiment, at 70 in the seal ring edge. The notches are part cylindrical, are four in number and are equiangularly spaced, i.e., are on 90° centres. It has been discovered that by forming the notches in the outer edges of the seal ring to communicate with the seal interface, the tendency is for the lubricating oil injected onto the outer surface of the outer ring to be held in place and serve to cool the area to keep the ring and disc cool. Additionally, capillary action draws the oil into the interface to reduce the frictional forces otherwise occuring in this area.

In this particular embodiment the outside diameter of the seal surface is 1.124" and the notches have a diameter of 0.093", an axial length of about 0.075" and a radial depth of between 0.025" and 0.030".

## Claims

1. A rotary shaft seal comprising a disc secured to and rotating with the shaft and a non-rotating seal ring axially biased with engagement with the disc to define a radial sealing interface between the disc and ring, one of said disc and ring having a plurality of circumferentially spaced notches communicating with the interface and with the periphery of that one of the disc and ring.

2. A rotary shaft seal as claimed in claim 1 wherein said notches are formed in the ring.

3. A rotary shaft seal as claimed in claim 1 or claim 2 in which there are four such notches.

4. A rotary shaft seal as claimed in claim 2 in which there are four such notches which are of part cylindrical shape and extend axially of said ring.

5. A rotary shaft seal comprising a disc secured to and rotating with the shaft and a non-rotating seal ring axially biased into engagement with the disc to define a radial sealing interface between the disc and ring, one of said disc and ring having a plurality of circumferentially spaced notches communicating with the interface and with an area of said one of said disc and ring beyond the interface and on the low pressure side of the seal.

6. A rotary shaft seal as claimed in claim 5 wherein said notches are four in number, are formed on said ring and are axially disposed.

FIG. 1

FIG. 3

FIG.5

FIG.2

FIG.4

# European Patent Office

## EUROPEAN SEARCH REPORT

Application Number

**EP 90 11 6524**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 241 626 (GOETZEWERKE) <br> * Whole document * <br> − − − | 1,3,5,6 | F 16 J 15/34 |
| A | FR-A-1 390 715 (BORG-WARNER) <br> * Whole document * <br> − − − | 1,3,5,6 | |
| A | US-A-4 407 512 (TRYTEK) <br> * Column 1, lines 52-54; column 3, lines 31-37; figure 2 * <br> − − − − − | 1,4 | |
| | | | **TECHNICAL FIELDS SEARCHED (Int. Cl.5)** |
| | | | F 16 J |

The present search report has been drawn up for all claims

| Place of search | Date of completion of search | Examiner |
|---|---|---|
| The Hague | 11 December 90 | LEGER M.G.M. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document